# EUROPEAN PATENT SPECIFICATION

(11) **EP 1 070 205 B1**
(45) Date of publication and mention of the grant of the patent: **23.06.2004**
(21) Application number: 99921335.8
(22) Date of filing: 06.04.1999
(51) Int. Cl.: F16B 2/22, F16B 21/07

(54) **ARRANGEMENT RELATING TO MECHANICALLY INTERLOCKING DEVICES**
SICH MECHANISCH UNTEREINANDER VERRIEGELNDE VORRICHTUNGEN BETREFFENDE ANORDNUNG
ARRANGEMENT RELATIF A DES DISPOSITIFS D'INTERVERROUILLAGE MECANIQUE

(30) Priority: 07.04.1998 SE 9801221
(43) Date of publication of application: 24.01.2001
(73) Proprietor: Telefonaktiebolaget LM Ericsson (publ), 164 83 Stockholm (SE)
(72) Inventor: PERSSON, Per-Hakan, S-244 91 Kävlinge (SE); FROHLUND, Stig, S-281 33 Hässleholm (SE); PILCHER, Martin, S-226 46 Lund (SE)
(74) Representative: Petri, Stellan
(86) International application number: PCT/SE1999/000560
(87) International publication number: WO 1999/051885

(56) References cited:
- EP-A1- 0 751 043
- WO-A1-83/00272
- GB-A- 2 106 977
- US-A- 4 656 697

## Description

### TECHNICAL FIELD OF THE INVENTION

The present invention relates to mechanical locking arrangements for enabling mechanical interlocking between two devices, in particular to locking arrangements that comprise a plunger unit and a lock and release unit according to the first part of claim 1 (WO 83/00272).

### DESCRIPTION OF RELATED ART

The technical evolution, in terms of features such as weight and size, in the field of portable mobile telephone terminals has reached a point where physiognomic considerations must be made. Limitations in terms of size of previous generations of mobile terminals were dictated by the size of the components of the terminal, not least the size of the battery pack. Present day terminals, on the other hand, comprise a small number of highly integrated low-power circuits that easily fit inside a palm-sized unit. In fact the dimensions of the smaller among the recently developed terminals are such that the distance between the loudspeaker and the microphone has become an important design factor. In order to further miniaturize the terminals, while still enabling a proper alignment between the loudspeaker/microphone and the ear/mouth of the user, mechanical solutions such as foldable lids and arms comprising a microphone or a speaker have become commonplace.

A problem relating to foldable and flip-lid equipped portable terminals, and in fact to any portable device that comprises protruding members that are attached by e.g. a hinge unit and are capable of being folded between different positions in relation to a main housing of the device, is how to enable single action lock and single action release of the protruding member.

An example of the state of the art in this respect is disclosed in US-5327584 where it is shown a portable radio with a cover release mechanism. Several separate parts act together to form the cover release mechanism: an engaging portion with a hole, a locking plate operated upon by an operating portion, a wire spring mounted on a stopper. Needless to say, by the mere fact that it comprises a multitude of sub-parts, this mechanism is relatively complicated in terms of both assembly and manufacture.

Another example of locking arrangements is to be found in UK patent application GB-2106977. A vanity case comprising a receptacle and a cover member has an arrangement for enabling snap engagement between the receptacle and the cover member. The snap engagement and disengagement are accomplished by applying force between two resilient latch tongues, one comprised in the cover member and one being part of the receptacle. The force is applied via a separate slider element.

### SUMMARY OF THE INVENTION

It is hence a problem, which is addressed by the present invention, how to enable one-hand single action lock and one-hand single action release of a protruding member such as e.g. a flip-lid at a portable communication device.

Yet another problem addressed by the present invention is how to enable single action lock and release of the protruding member, while utilizing a minimum of number of components.

The object of the present invention is to overcome the problems as stated above. This is in short achieved by providing a locking arrangement according to claim 1.

In some more detail, it is shown a locking arrangement at a portable device. The device comprises a main body and a movable protruding member. The protruding member is switchable between at least a first position and a second position with respect to the main body. The locking arrangement comprises a plunger unit and a lock and release unit with a fixed part and a resilient part. The resilient part is resilient along at least one direction of resilience away from the fixed part. The plunger unit is switchable, along a direction of insertion and retraction, between a disengaged position and an engaged position between the fixed part and the resilient part of the lock and release unit.

An advantage of the present invention is that only a small motion, e.g. a hand action, is required by a user of the invention in order to engage and disengage the plunger unit to and from the lock and release unit and thus releasaing the protruding member from the main body of the device.

Another advantage of the present invention is that, by the fact that the lock and release unit can be produced in one single unit, the complexity, and hence also the cost, relating to manufacture and assembly onto the device is low.

### BRIEF DESCRIPTION OF THE DRAWINGS

Figures 1a-c show two schematic side views and a cross-sectional view of a first embodiment of a locking arrangement according to the prior art.
Figures 2a-c show one schematic side view and two cross-sectional views of a second embodiment of a locking arrangement according to the prior art.
Figure 3 shows a schematic side view of an embodiment of a locking arrangement according to the invention.
Figure 4 shows a schematic side view of an embodiment of a locking arrangement according to the prior art.
Figure 5 shows a schematic perspective view of a portable telephone with a flip-lid.
Figures 6a-c show three schematic side views of a plunger unit.
Figures 7a-b show two schematic perspective views of a lock and release unit attached to a housing of a device.

### DETAILED DESCRIPTION OF PREFERRED EMBODIMENTS

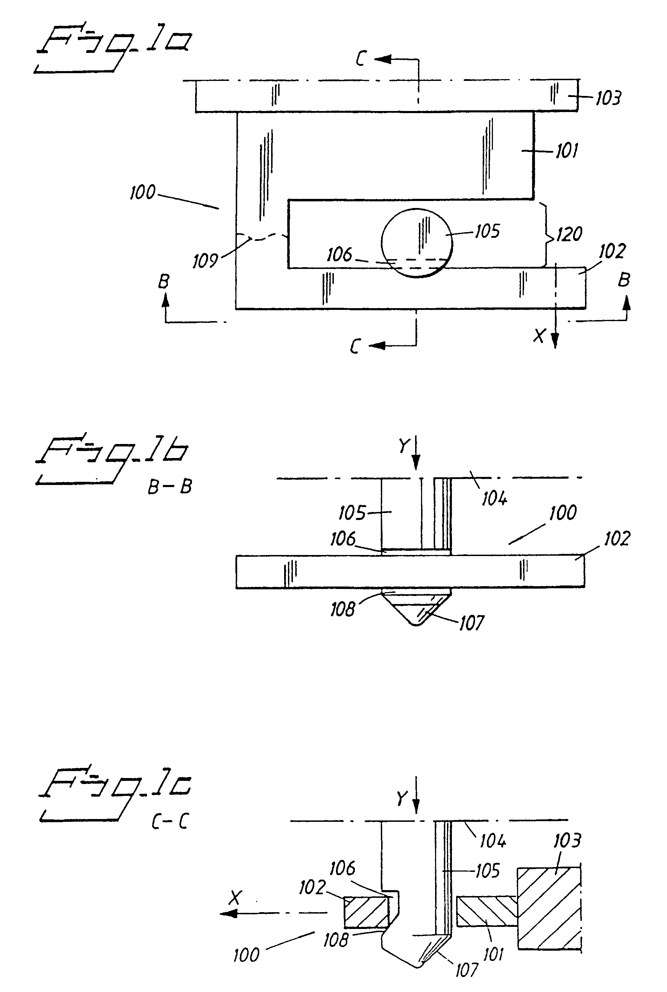

A first embodiment of a locking arrangement according to the invention, showing the general function of locking a member 104 to a main body 103, is illustrated in figures 1a, 1b and 1c. The arrangement comprises a lock and release unit 100 and a plunger 105.

A first side view is shown in figure 1a where the lock and release unit 100 is attached to the main body 103. The particular properties of the main body 103 are outside the scope of the invention, although a typical main body 103 may be a portable device such as a telephone as will be further exemplified below. Furthermore, the attachment of the lock and release device 100 to the main body 103 is also outside the scope of the invention and is hence not explained in further detail in connection with figures 1a-c.

The lock and release device 100 comprises an elongated fixed part 101, which is attached to the main body 103, and an elongated resilient part 102. The resilient part 102 is resilient along a direction X away from the fixed part 101 creating a gap 120 having varying extent between the fixed and resilient parts 101,102.

A delimiting line 109 has been indicated in the figure in order to illustrate roughly where the resilient part 102 and the fixed part 101 of the lock and release unit 100 transit into each other. The delimiting line 109 is not an illustration of where the two parts 101,102 attach to each other, thus implicating a necessity of two seaparate parts. Rather, the delimiting line 109 is simply an indication of the fact that the lock and release unit 100 may be in the form of one single unit as well as being formed of two separate parts joined together.

The actual resilience of the resilient part 102 is obtained according to characteristics such as physical properties of the material of the part. It is known in the art how to obtain suitable resilient properties and it will hence not be discussed in detail. However, it is obvious that a injection molding is a reasonable choice. Nevertheless, other materials such as metals or even wood may be suitable depending on the application.

With reference to figures 1b and 1c, an elongated plunger unit 105 having a notch 106 and a tapered end 107 is attached to the member 104. The member 104 is to be locked to the main body 103 by means of the locking arrangement comprising the plunger unit 105 and the lock and release unit 100. Examples of members 104 having specific characteristics will be discussed below in connection with other embodiments of the invention.

The plunger unit 105 is in figures 1a-c located within the gap 120 between the resilient part 102 and the fixed part 101 locking the member 104 to the main body 103. The locking is effectuated by moving the plunger 105 with it's tapered end 107 along a direction Y, forcing the resilient part 102 along direction X, forcing the resilient part 102 along direction X widening the gap 120 until the notch 106 catches the resilient part 102 which retracts backwards against the direction X. The notch 106 comprises a slanted edge 108 along which the resilient part 102 slides when retracting. The direction X is mainly perpendicular to the direction y. This is also the case in the other following embodiments of the invention.

By forcing the member 104 with the attached plunger 105 backwards along the direction Y the member 104 may be unlocked from the main body 103. Such a backwards motion will entail the resilient part 102 sliding against the slanted edge 108 of the notch 106 and hence bring about a motion of the resilient part 102 towards the direction X, widening the gap 120 towards the direction X, widening 104 and plunger 105 will result in an unlocking of the plunger from the lock and release unit 100.

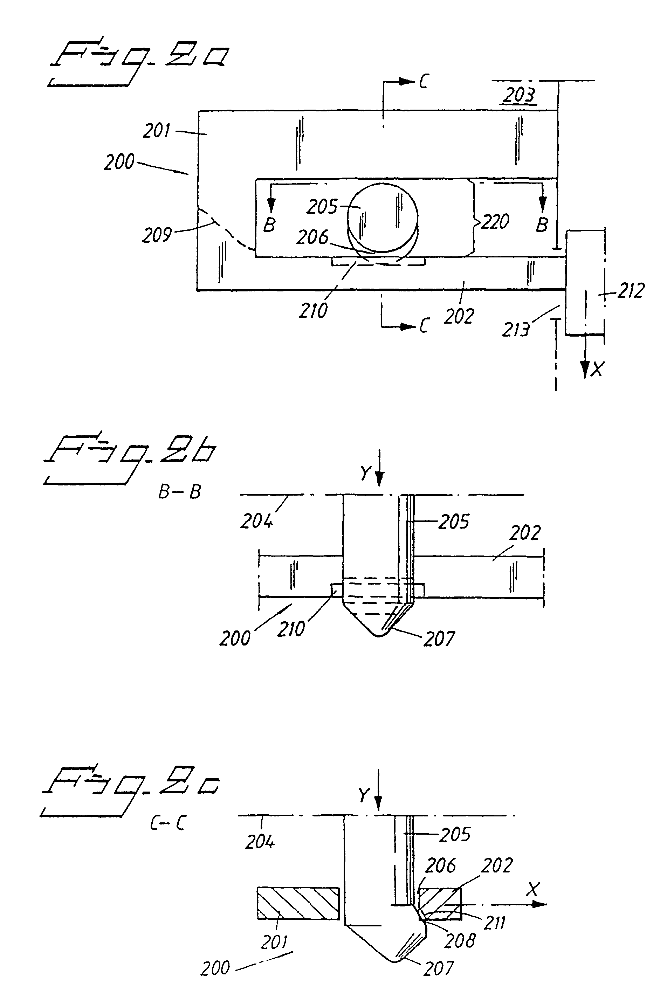

A second embodiment is disclosed in figures 2a-c. As in the previous example, a lock and release unit 200 comprising a fixed part 201 and a resilient part 202 is attached to a main body 203 of e.g. a portable device. In a typical example of an implementation, the main body 203 may be a mobile telephone terminal. In such a case the main body 203 would correspond to a housing of such a telephone terminal.

Both the fixed part 201 and the resilient part 202 are elongated and are forming a single unit. A dashed line 209 indicates roughly where a transition between the two parts 202, 202 is located. The resilient part 202 is resilient along a direction X away from the fixed part 201 creating a gap 220 having varying extent. Attached to, or rather forming an integrated part of, the resilient part 202 is an actuating part 212. The actuating part 212 extends through a hole 213 in the main body 203 making it accessible from without.

Also, as in the previous example, an elongated plunger unit 205 having a notch 206 and a tapered end 207 is attached to a member 204. The member 204 is to be locked to the main body 203 by means of the locking arrangement comprising the plunger unit 205 and the lock and release unit 200. A typical example of a member 204 may be a flip-lid at a mobile telephone terminal.

The plunger unit 205 is located within the gap 220 between the resilient part 202 and the fixed part 201 locking the member 204 to the main body 203.

As in the example shown in connection with figures 1a-c, the locking and unlocking is effectuated by moving the plunger 205 along a direction Y, forcing the resilient part 202 along direction X widening the gap 220 until the notch 206 catches a slanted edge 211 of a notch 210 in the resilient part 201. The notch 206 in the plunger also comprises a slanted edge 208 along which the resilient part 202 slides when retracting.

The member 204 with the attached plunger 205 is unlocked from the main body by a pulling force applied backwards along the direction Y. A backwards motion resulting from such a force will entail the slanted edge 211 of the notch 210 in the resilient part 202 sliding against the slanted edge 208 of the notch 206 and hence bring about a motion of the resilient part 202 towards the direction X, widening the gap 220. Further backward motion of the member 204 and plunger 205 will result in an unlocking of the plunger 205 from the lock and release unit 200. The pulling force needed to release the plunger 205 from the locked position depends of course on the sizes an physical characteristics of the parts involved. By also applying a force upon the resilient part 202 along the direction X the unlocking action may be facilitated. Such a force may be applied via the actuating part 212. In fact both the locking action and the unlocking action may be facilitated by way of applying a force upon the actuating part 212 along the direction X.

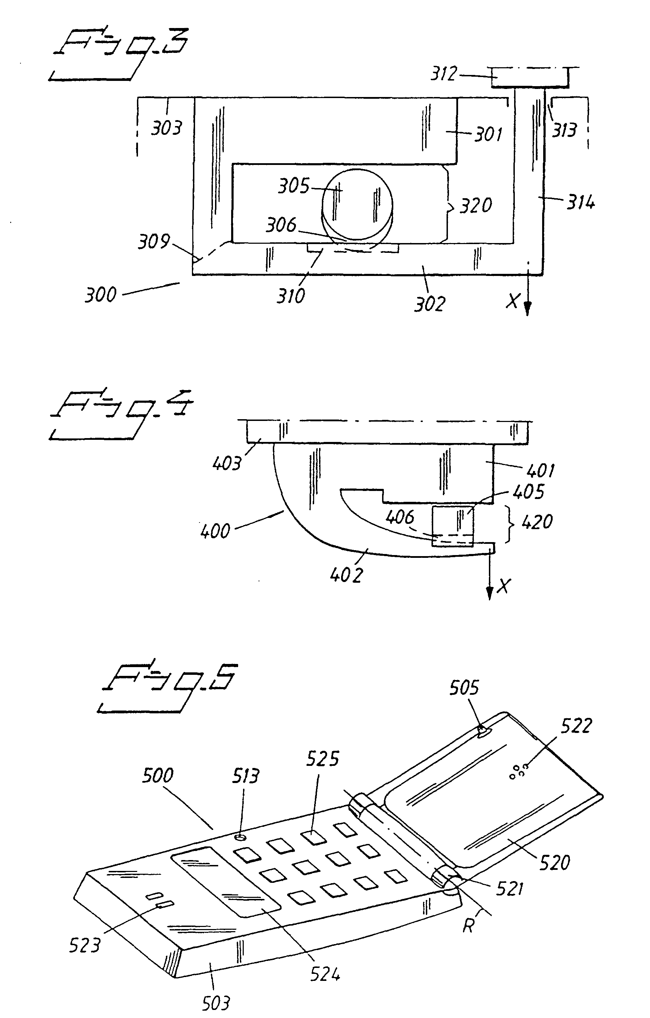

An embodiment according to the invention of a locking arrangement 300 is schematically disclosed in figure 3. As in previous examples, a fixed part 301 is attached to a main body 303 such as a housing of a telephone terminal. The fixed part 301 transfer to a resilient part 302 at a location indicated by a dashed line 309. The resilient part 302 is resilient along a direction X and is capable of being dislocated forwards and backwards along the direction X via an actuating part 312. The actuating part 312 forms part of an end of an actuating arm 314 which is elongated along the direction X and attached to the resilient part 302. The actuating arm 314 extends through a hole 313 in the main body 303 in more or less the same manner as in the previous example.

Figure 3 also shows a plunger 305 having a notch 306 which is capable of being engaged into a locked position and disengaged from the locked position as shown in the examples above.

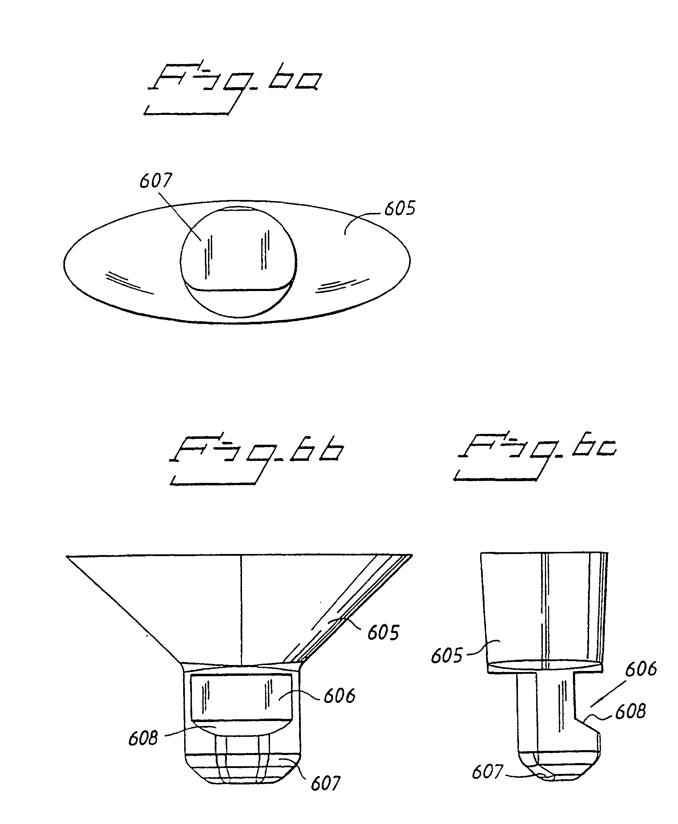

Yet another example of a locking arrangement 400 is schematically disclosed in figure 4. A fixed part 401 is attached to a main body 403. The fixed part 401 transfer to a resilient part 402 which is resilient along a direction X. In a gap 420 between the fixed part 401 and the resilient part 402 is a plunger 405 with a notch 406 located. This example is merely to illustrate yet a different shape of the parts, as e.g. the rectangular cross-section of the plunger 405 seen in the figure.

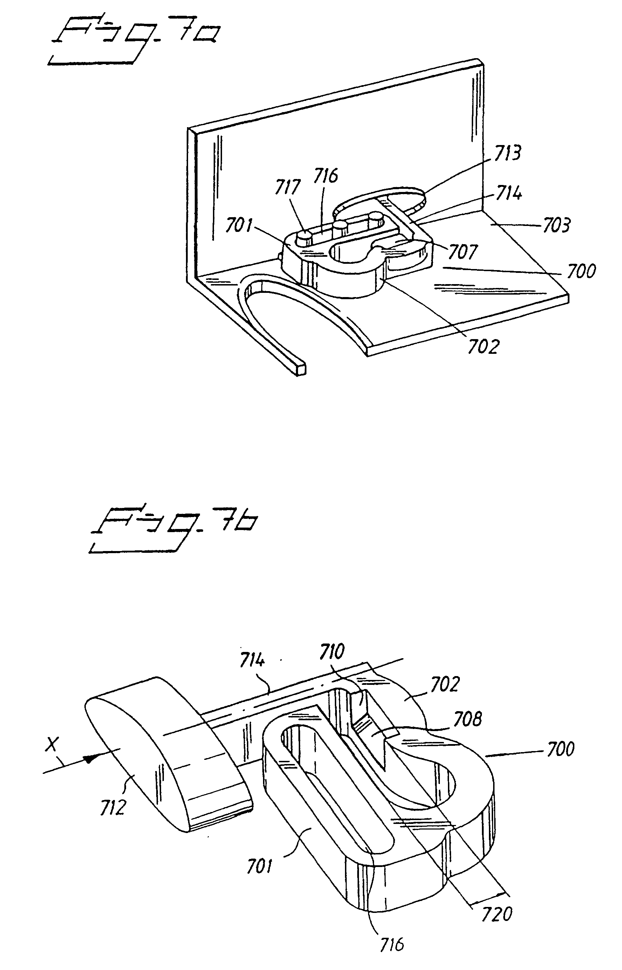

Figures 5, 6a-c and 7a-b show yet another illustration of a preferred embodiment of the present invention. A mobile telephone terminal 500 comprises a main body in the form of a housing 503 to which is attached a flip-lid 520. As is known in the art the terminal comprises means for communicating in a telecommunication network. In the housing 503 is located a display 524, keys 525 and a loudspeaker 523 and in the flip-lid 520 a microphone.

The flip-lid 520 is capable of being rotated from an open position to a closed position covering the keys 525 around an axis R by means of a hinge mechanism 521. Although not shown in figure 5, the hinge mechanism 521 may comprise means for spring-loading the lid 520 when in the closed position against the housing 503. The flip-lid 520 is in figure 5 shown in the open position.

In order to enable the lid to be engaged and disengaged to and from the closed and open positions respectively, the terminal 500 comprises a locking arangement according to the present invention. A plunger unit 505 is attached to the flip-lid 520 and a lock and release unit (700 in figure 7a) is attached inside the housing 503. A hole 513 in the housing 503 allows access for the plunger 505 to the lock and release unit (700 in figure 7a).

Figures 6a-c show three side views of a plunger 605 such as the plunger 505 shown attached to the flip-lid 520 in figure 5. The plunger has a tapered end 607 and a notch 606 with a slanted edge 608, generally of the same shape as the plungers 105,205 shown in previous examples. Although the plunger 605 is shown to be a separate part detached from any flip-lid etc, it is understood that the plunger 605 may be an integral part of the flip-lid (520 in figure 5).

Figures 7a and 7b show in some detail a lock and release unit 700 which is attached to the inside of a housing 703, corresponding to the housing 503 in figure 5. A fixed part 701, a resilient part 702 and an actuating arm 714 with an actuating part 712. Similar to previous examples, the resilient part 702 has a direction of resilience X away from the fixed part 701 which enables a gap 720 between the two parts to become wider when a force is applied along the direction X on the actuating part 712. The fixed part 701 is attached to the inside of the housing 703 by means of knobs 717 protruding from the housing 703 and engaging the fixed part 701 via an opening 716.

A tip 707 of a plunger (505 in figure 5, 605 in figure 6a-c) having a tapered end 707 is engaged in a notch 708 in the resilient part 702 in the same manner as disclosed in previous examples above. By applying a force along the direction X on the actuating part 712 protruding out from the housing 703 through a hole 713, the gap 720 widens and the plunger is detached from the engaged position.

The above examples above show implementations of the invention where a plunger is attached to a protruding member and a lock and releasae unit is attached to a main body of a device. However, other embodiments where a plunger is attached to a main body and a lock and release unit is attached to a protruding member are, needless to say, also feasible.

## Claims

1. Locking arrangement at a portable device, said device comprising a main body (103, 203, 303, 403, 503, 703) and a movable protruding member (104, 204, 520) switchable between a first position and a second position with respect to the main body (103, 203, 303, 403, 503, 703),
said locking arrangement comprising a plunger unit (105, 205, 305, 405, 505, 605) and a lock and release unit (100, 200, 300, 400, 700),
said lock and release unit (100, 200, 300, 400, 700) comprising a fixed part (101, 201, 301, 401, 701) and a resilient part (102, 202, 302, 402, 702),
said resilient part (102, 202, 302, 402, 702) having at least one direction of resilience (X) away from the fixed part (101, 201, 301, 401, 701),
said plunger unit (105, 205, 305, 405, 505, 605) being switchable, along a direction of insertion and
retraction (Y), between a disengaged position and an engaged position between the fixed part (101, 201, 301, 401, 701) and the resilient part (102, 202, 302, 402, 702) of the lock and release unit (100, 200, 300, 400, 700),
the lock and release unit (100, 200, 300, 400, 700) comprises an actuating part (212, 312, 712) for enabling actuation of the resilient part (102, 202, 302, 402, 702) along the direction of resilience (X) which direction is mainly perpendicular to the direction of insertion and retraction (Y), said actuating part forming an extension of the resilient part of the lock and release unit,
**characterized in that** an actuating arm (314, 714) is elongated along said direction of resilience (X) and attached to the resilient part (102, 202, 302, 402, 702) for facilitating a locking action or an unlocking action by way of applying a force upon the actuating arm (314, 714) along said direction of resilience (X).

2. Locking arrangement according to claim 1, **characterized in that** the plunger unit (105, 205, 305, 405, 505, 605) is attached to the protruding member (104, 204, 520) and the lock and release unit (100, 200, 300, 400, 700) is by the fixed part (101, 201, 301, 401, 701) attached to the main body (103, 203, 303, 403, 503, 703) of the device.

3. Locking arrangement according to claim 1, **characterized in that** the plunger unit (105, 205, 305, 405, 505, 605) is attached to the main body (103, 203, 303, 403, 503, 703) of the device and the lock and release unit (100, 200, 300, 400, 700) is attached by the fixed part (101, 201, 301, 401, 701) to the protruding member (104, 204, 520).

4. Locking arrangement according to any one of claims 1-3, **characterized in that** the lock and release unit (100, 200, 300, 400, 700) is in a form of a single unit.

5. Locking arrangement according to any one of claims 1-3, **characterized in that** the lock and release unit (100, 200, 300, 400, 700) is in a form of at least two separate parts that are joined together.

6. Locking arrangement according to any one of claims 1-5, **characterized in that** the resilient part (102, 202, 302, 402, 702) and the fixed part (101, 201, 301, 401, 701) of the lock and release unit (100, 200, 300, 400, 700) both are on the whole elongated in shape and are joined together at one of their respective ends.

7. Locking arrangement according to any one of claims 1-6, **characterized in that** the plunger unit (105, 205, 305, 405, 505, 605) has a tapered end (107, 207, 607, 707) for enabling easy separation of the resilient part (102, 202, 302, 402, 702) of the lock and release unit (100, 200, 300, 400, 700) from the fixed part (101, 201, 301, 401, 701) when the plunger unit (105, 205, 305, 405, 505, 605) is inserted along the direction of insertion and retraction (Y) into the engaged position.

8. Locking arrangement according to any one of claims 1-7, **characterized in that** the plunger unit (105, 205, 305, 405, 505, 605) has a notch (106, 206, 306, 406, 606) for locking the plunger unit (105, 205, 305, 405, 505, 605) in the engaged position.

9. Locking arrangement according to claim 8, **characterized in that** the notch (106, 206, 306, 406, 606) comprises a slanted edge (108, 208, 608) where the direction of slant is in respect of the direction of insertion and retraction (Y).

10. Locking arrangement according to any one of claims 8-9, **characterized in that** the lock and release unit (100, 200, 300, 400, 700) has a notch (210, 310, 710) for engaging the plunger notch (106, 206, 306, 406, 606) in the engaged position.

11. Locking arrangement according to claim 10, **characterized in that** the notch (210, 310, 710) of the lock and release unit (100, 200, 300, 400, 700) comprises a slanted edge (211, 708) where the direction of slant is in respect of the direction of insertion and retraction (Y).

12. Locking arrangement according to any one of claims 10-11, **characterized in that** the notch (210, 310, 710) of the lock and release unit (100, 200, 300, 400, 700) is in the resilient part (102, 202, 302, 402, 702).

13. Portable communication device comprising a main body (103, 203, 303, 403, 503, 703) and a flip-lid (104, 204, 520) attached to the main body (103, 203, 303, 403, 503, 703) with a hinge unit (521), said flip-lid (104, 204, 520) being switchable between at least a first and a second position with respect to the main body (103, 203, 303, 403, 503, 703), **characterized by** a locking arrangement according to claim 1.

## Patentansprüche

1. Verriegelungsanordnung an einer tragbaren Einrichtung, wobei diese Einrichtung einen Hauptkörper (103, 203, 303, 403, 503, 703) und ein bewegliches hervorragendes Element (104, 204, 520), welches zwischen einer ersten Position und einer zweiten Position mit Bezug auf den Hauptkörper (103, 203, 303, 403, 503, 703) umschaltbar ist, umfasst,
wobei die Verriegelungsanordnung eine Kolbeneinheit (105, 205, 305, 405, 505, 605) und eine Schließ- und Freigabeeinheit (100, 200, 300, 400, 700) umfasst,
wobei die Schließ- und Freigabeeinheit (100, 200, 300, 400, 700) einen feststehenden Teil (101, 201, 301, 401, 701) und einen elastischen Teil (102, 202, 302, 402, 702) umfasst,
worin der elastische Teil (102, 202, 302, 402, 702) zumindest eine Elastizitätsrichtung (X) weg von dem befestigten Teil (101, 201, 301, 401, 701) aufweist,
die Kolbeneinheit (105, 205, 305, 405, 505, 605) entlang einer Einführungs- und Rückzugsrichtung (Y) zwischen einer eingerasteten und einer nicht eingerasteten Position zwischen dem feststehenden Teil (101, 201, 301, 401, 701) und dem elastischen Teil (102, 202, 302, 402, 702) der Schließ- und Freigabeeinheit (100, 200, 300, 400, 700) umschaltbar ist,
worin die Schließ- und Freigabeeinheit (100, 200, 300, 400, 700) einen Betätigungsteil (212, 312, 712) zum Ermöglichen einer Betätigung des elastischen Teils (102, 202, 302, 402, 702) entlang der Elastizitätsrichtung (X), die hauptsächlich senkrecht zu der Einführ- und Rückzugsrichtung (Y) steht, umfasst, wobei der Betätigungsteil eine Verlängerung des elastischen Teils der Schließ- und Freigabeeinheit ausbildet,
**dadurch gekennzeichnet, dass** ein Betätigungsarm (314, 714) sich entlang der Elastizitätsrichtung (X) erstreckt und an dem elastischen Teil (102, 202, 302, 402, 702) befestigt ist, um eine Schließaktion oder eine Löseaktion durch Aufbringen einer Kraft auf den Betätigungsarm (314, 714) entlang der Elastizitätsrichtung (X) zu erleichtern.

2. Verriegelungsanordnung gemäß Anspruch 1, **dadurch gekennzeichnet, dass** die Kolbeneinheit (105, 205, 305, 405, 505, 605) an dem hervorragenden Element (104, 204, 520) angeordnet ist und dass die Schließ- und Freigabeeinheit (100, 200, 300, 400, 700) durch den befestigten Teil (101, 201, 301, 401, 701) an dem Hauptkörper (103, 203, 303, 403, 503, 703) der Vorrichtung befestigt ist.

3. Verriegelungsanordnung gemäß Anspruch 1, **dadurch gekennzeichnet, dass** die Kolbeneinheit (105, 205, 305, 405, 505, 605) an dem Hauptkörper (103, 203, 303, 403, 503, 703) befestigt ist und die Schließ- und Freigabeeinheit (100, 200, 300, 400, 700) durch den befestigten Teil (101, 201, 301, 401, 701) an dem hervorragenden Element (104, 204, 520) befestigt ist.

4. Verriegelungsanordnung gemäß einem der Ansprüche 1 bis 3, **dadurch gekennzeichnet, dass** die Schließ- und Freigabeeinheit (100, 200, 300, 400, 700) in Form einer einzigen Einheit ausgebildet ist.

5. Verriegelungsanordnung gemäß einem der Ansprüche 1 bis 3, **dadurch gekennzeichnet, dass** die Schließ- und Freigabeeinheit (100, 200, 300, 400, 700) in Form von zumindest zwei separaten Teilen, welche miteinander verbunden sind, ausgebildet ist.

6. Verriegelungsanordnung gemäß einem der Ansprüche 1 bis 5, **dadurch gekennzeichnet, dass** der elastische Teil (102, 202, 302, 402, 702) und der befestigte Teil (101, 201, 301, 401, 701) der Schließ- und Freigabeeinheit (100, 200, 300, 400, 700) jeweils im Ganzen eine längliche Form aufweisen und miteinander an einem der jeweiligen Enden verbunden sind.

7. Verriegelungsanordnung gemäß einem der Ansprüche 1 bis 6, **dadurch gekennzeichnet, dass** die Kolbeneinheit (105, 205, 305, 405, 505, 605) ein kegelförmiges Ende (107, 207, 607, 707) zum Ermöglichen einer leichten Trennung des elastischen Teils (102, 202, 302, 402, 702) der Schließ- und Freigabeeinheit (100, 200, 300, 400, 700) von dem befestigten Teil (101, 201, 301, 401, 701) zu ermöglichen, wenn die Kolbeneinheit (105, 205, 305, 405, 505, 605) entlang der Richtung des Einführens und Zurückziehens (Y) in die eingerastete Position eingeführt wird.

8. Verriegelungsanordnung gemäß einem der Ansprüche 1 bis 7, **dadurch gekennzeichnet, dass** die Kolbeneinheit 105, 205, 305, 405, 505, 605) eine Einkerbung (106, 206, 306, 406, 606) zum Verriegeln der Kolbeneinheit (105, 205, 305, 405, 505, 605 in der eingerasteten Position aufweist.

9. Verriegelungsanordnung gemäß Anspruch 8, **dadurch gekennzeichnet, dass** die Einkerbung (106, 206, 306, 406, 606) eine abgeschrägte Kante (108, 208, 608), bei der die Richtung der Abschrägung in Bezug auf die Richtung der Einführung und des Zurückziehens (Y) besteht, umfasst.

10. Verriegelungsanordnung gemäß einem der Ansprüche 8 bis 9, **dadurch gekennzeichnet, dass** die Schließ- und Freigabeeinheit (100, 200, 300, 400, 700) eine Einkerbung (210, 310, 710) zum Einrasten der Kolbeneinkerbung (106, 206, 306, 406, 606) in der eingerasteten Position aufweist.

11. Verriegelungsanordnung gemäß Anspruch 10, **dadurch gekennzeichnet, dass** die Einkerbung (210, 310, 710) der Schließ- und Freigabeeinheit (100, 200, 300, 400, 700) eine abgeschrägte Kante (211, 708) umfasst, wobei die Richtung der Abschrägung in Bezug zu der Richtung des Einführens und Zurückziehens (Y) besteht.

12. Verriegelungsanordnung gemäß einem der Ansprüche 10 bis 11, **dadurch gekennzeichnet, dass** die Einkerbung (210, 310, 710) der Schließ- und Freigabeeinheit (100, 200, 300, 400, 700) in dem elastischen Teil (102, 202, 302, 402, 702) ist.

13. Tragbare Kommunikationsvorrichtung mit einem Hauptkörper (103, 203, 303, 403, 503, 703) und einem Schnappdeckel (104, 204, 520), welcher an dem Hauptkörper (103, 203, 303, 403, 503, 703) über eine Gelenkeinheit (521) befestigt ist, wobei der Schnappdeckel (104, 204, 520) zwischen zumindest einer ersten und einer zweiten Position in Bezug auf den Hauptkörper (103, 203, 303, 403, 503, 703) umschaltbar ist, **gekennzeichnet durch** eine Verriegelungsanordnung gemäß Anspruch 1.

## Revendications

1. Dispositif de verrouillage d'un appareil portable, ledit appareil comportant un corps principal (103, 203, 303, 403, 503, 703) et un élément mobile en saillie (104, 204, 520) pouvant basculer entre une première position et une seconde position par rapport au corps principal (103, 203, 303, 403, 503, 703),
ledit dispositif de verrouillage comportant ure unité à plongeur (105, 205, 305, 405, 505, 605) et une unité de verrouillage et de libération (100, 200, 300, 400, 700),
ladite unité de verrouillage et de libération (100, 200, 300, 400, 700) comportant une partie fixe (101, 201, 301, 401, 701) et une partie élastique (102, 202, 302, 402, 702),
ladite partie élastique (102, 202, 302, 402, 702) ayant au moins une direction d'élasticité (X) s'éloignant de la partie fixe (101, 201, 301, 401, 701),
ladite unité à plongeur (105, 205, 305, 405, 505, 605) pouvant être déplacée, suivant une direction d'introduction et de retrait (Y), entre une position dégagée et une position engagée entre la partie fixe (101, 201, 301, 401, 701) et la partie élastique (102, 202, 302, 402, 702) de l'unité de verrouillage et de libération (100, 200, 300, 400, 700),
l'unité de verrouillage et de libération (100, 200, 300, 400, 700) comportant une partie d'actionnement (212, 312, 712) pour permettre l'actionnement de la partie élastique (102, 202, 302, 402,. 702) suivant la direction d'élasticité (X), laquelle direction est principalement perpendiculaire à la direction d'introduction et de retrait (Y), ladite partie d'actionnement formant un prolongement de la partie élastique de l'unité de verrouillage et de libération,
**caractérisé en ce qu'**un bras d'actionnement (314, 714) est allongé suivant ladite direction d'élasticité (X) et est relié à la partie élastique (102, 202, 302, 402, 702) pour faciliter une action de verrouillage ou une action de déverrouillage en appliquant une force sur le bras d'actionnement (314, 714) suivant ladite direction d'élasticité (X).

2. Dispositif de verrouillage selon la revendication 1, **caractérisé en ce que** l'unité à plongeur (105, 205, 305, 405, 505, 605) est reliée à l'élément en saillie (104, 204, 520) et l'unité de verrouillage et de libération (100, 200, 300, 400, 700) est reliée par la partie fixe (101, 201, 301, 401, 701) au corps principal (103, 203, 303, 403, 503, 703) de l'appareil.

3. Dispositif de verrouillage selon la revendication 1, **caractérisé en ce que** l'unité à plongeur (105, 205, 305, 405, 505, 605) est reliée au corps principal (103, 203, 303, 403; 503, 703) de l'appareil et l'unité de verrouillage et de libération (100, 200, 300, 400, 700) est reliée par la partie fixe (101, 201, 301, 401, 701) à l'élément en saillie (104, 204, 520).

4. Dispositif de verrouillage selon l'une quelconque des revendications 1 à 3, **caractérisé en ce que** l'unité de verrouillage et de libération (100, 200, 300, 400, 700) se présente sous la forme d'une unité simple.

5. Dispositif de verrouillage selon l'une quelconque des revendications 1 à 3, **caractérisé en ce que** l'unité de verrouillage et de libération (100, 200, 300, 400, 700) se présente sous la forme d'au moins deux pièces séparées qui sont reliées entre elles.

6. Dispositif de verrouillage selon l'une quelconque des revendications 1 à 5, **caractérisé en ce que** la partie élastique (102, 202, 302, 402, 702) et la partie fixe (101, 201, 301, 401, 701) de l'unité de verrouillage et de libération (100, 200, 300, 400, 700) sont toutes deux dans leur ensemble d'une forme allongée et sont reliées entre elles par l'une de leurs extrémités respectives.

7. Dispositif de verrouillage selon l'une quelconque des revendications 1 à 6, **caractérisé en ce que** l'unité à plongeur (105, 205, 305, 405, 505, 605) présente une extrémité effilée (107, 207, 607, 707) pour permettre une séparation aisée de la partie élastique (102, 202, 302, 402, 702) de l'unité de verrouillage et de libération (100, 200, 300, 400, 700) de la partie fixe (101, 201, 301, 401, 701), lorsque l'unité à plongeur (105, 205, 305, 405, 505, 605) est introduite suivant la direction d'introduction et de retrait (Y) dans la position engagée.

8. Dispositif de verrouillage selon l'une quelconque des revendications 1 à 7, **caractérisé en ce que** l'unité à plongeur (105, 205, 305, 405, 505, 605) présente une encoche (106, 206, 306, 406, 606) pour le verrouillage de l'unité à plongeur (105, 205, 305, 405, 505, 605) dans la position engagée.

9. Dispositif de verrouillage selon la revendication 8, **caractérisé en ce que** l'encoche (106, 206, 306, 406, 606) comporte un bord incliné (108, 208, 608) où la direction d'inclinaison est par rapport à la direction d'introduction et de retrait (Y).

10. Dispositif de verrouillage selon l'une quelconque des revendications 8 et 9, **caractérisé en ce que** l'unité de verrouillage et de libération (100, 200, 300, 400, 700) présente une encoche (210, 310, 710) destinée à engager l'encoche (106, 206, 306, 406, 606) du plongeur dans la position engagée.

11. Dispositif de verrouillage selon la revendication 10, **caractérisé en ce que** l'encoche (210, 310, 410) de l'unité de verrouillage et de libération (100, 200, 300, 400, 700) comporte un bord incliné (211, 708) où la direction d'inclinaison est par rapport à la direction d'introduction et de retrait (Y).

12. Dispositif de verrouillage selon l'une quelconque des revendications 10 et 11, **caractérisé en ce que** l'encoche (210, 310, 710) de l'unité de verrouillage et de libération (100, 200, 300, 400, 700) se trouve dans la partie élastique (102, 202, 302, 402, 702).

13. Appareil portable de communication comportant un corps principal (103, 203, 303, 403, 503, 703). et un couvercle basculant (104, 204, 520) relié au corps principal (103, 203, 403, 503, 703) à l'aide d'une unité à charnière (521), ledit couvercle basculant (104, 204, 520) pouvant être déplacé entre au moins des première et seconde positions par rapport au corps principal (103, 203, 303, 403, 503, 703), **caractérisé par** un dispositif de verrouillage selon la revendication 1.
